# EUROPÄISCHE PATENTSCHRIFT

(11) **EP 2 376 324 B1**
(45) Veröffentlichungstag und Bekanntmachung des Hinweises auf die Patenterteilung: **10.10.2018**
(21) Anmeldenummer: 09744151.3
(22) Anmeldetag: 30.10.2009
(51) Int. Cl.: B62M 6/55, B62M 9/04

(54) **HYBRIDANTRIEB FÜR EIN ELEKTROFAHRRAD**
HYBRID BICYCLE DRIVE
ENTRAÎNEMENT HYBRIDE POUR BICYCLETTE

(30) Priorität: 11.12.2008 DE 102008054505; 07.10.2009 DE 102009045447
(43) Veröffentlichungstag der Anmeldung: 19.10.2011
(73) Patentinhaber: Robert Bosch GmbH, 70442 Stuttgart (DE)
(72) Erfinder: KIMMICH, Peter, 71101 Schoenaich (DE); KUSTOSCH, Mario, 71665 Vaihingen/Enz (DE); KOHLRAUSCH, Philipp, 70180 Stuttgart (DE)
(86) Internationale Anmeldenummer: PCT/EP2009/064375
(87) Internationale Veröffentlichungsnummer: WO 2010/066511

(56) Entgegenhaltungen:
- WO-A1-00/43259
- DE-A1- 19 629 788
- JP-A- 2008 285 069
- US-B1- 6 196 347

## Beschreibung

### Stand der Technik

Die vorliegende Erfindung betrifft einen Hybridantrieb für ein Elektrofahrrad. Elektrofahrräder sind aus dem Stand der Technik in unterschiedlichen Ausgestaltungen bekannt. Hierbei weisen bekannte Elektrofahrräder, z.B. jeweils einen Elektroantrieb in der Nabe des Vorder- oder Hinterrades auf.

Aus der WO 91/19637 ist ein Hybridantrieb für ein Hybridfahrzeug bekannt. Dabei wird das Hybridfahrzeug mit einem Hilfsmotor angetrieben, der das Sonnenrad eines in einer Nabe angeordneten Planetengetriebes treibt und die Muskelkraft des Fahrers auf das Hohlrad des Planetengetriebes wirkt. Bei der beschriebenen Ausführungsform erfolgt der Abtrieb auf das Hinterrad des Hybridfahrzeugs, wobei der Hilfsmotor nicht in das Planetengetriebe integriert ist. Die getrennte Anordnung von Elektroantrieb und Getriebe wirkt sich nachteilig auf das Handling und Fahrverhalten des Fahrzeugs aus, da durch diese Bauart der Schwerpunkt des Antriebs und somit des Fahrzeugs in Richtung zum Radantrieb verschoben ist. Auch das Dokument WO 00/43259 A1 offenbart einen Hybridantrieb für ein Elektrofahrrad gemäß dem Stand der Technik.

### Offenbarung der Erfindung

Das erfindungsgemäße Fahrrad mit elektrischem Hilfsantrieb mit den Merkmalen des Patentanspruchs 1 weist demgegenüber den Vorteil auf, dass hierbei der Elektromotor und das Planetengetriebe zusammen auf einer im wesentlichen mittigen und tiefen Einbauposition am Fahrrad im Bereich des Kurbeltriebs angeordnet sind. Dies trägt wesentlich zu einem ausgewogenen und gutmütigen Fahrverhalten des Fahrzeugs bei, da das Gewicht der so positionierten Antriebseinheit die Verschiebung des Schwerpunkts des Fahrrads weg vom Antriebsrad bewirkt. Ferner kann die gesamte Antriebs-/Getriebeeinheit kompakter ausgeführt und infolge ihrer geringeren Anzahl von Bauteilen kostengünstiger produziert werden. Erfindungsgemäß umfasst das Fahrrad ein Planetengetriebe und einen Elektromotor, die gemeinsam in der Kurbelachse des Kurbeltriebs angeordnet sind. Das Planetengetriebe ist dabei einerseits mit dem Kurbeltrieb und andererseits mit dem Elektromotor verbunden. Hierdurch wird ein besonders kompakter Aufbau zusammen mit dem Kurbeltrieb sowie eine tiefe Schwerpunktlage der Antriebseinheit unterhalb des Fahrers erreicht. Gemäß der Erfindung ist der Kurbeltrieb mit dem Sonnenrad verbunden, der Elektromotor mit einem Planetenträger verbunden und eine Kette für einen Abtrieb mit dem Hohlrad verbunden. Somit rotieren alle Teile des Planetengetriebes, wobei insbesondere einen Reduktion einer Drehzahl des Elektromotors erreicht wird.

Die Unteransprüche zeigen bevorzugte Weiterbildungen der Erfindung.

Weiterhin ist der Elektromotor bevorzugt über eine Hohlwelle, die die Tretkurbelwelle umgibt, mit dem Sonnenrad des Planetengetriebes verbunden. Hierdurch kann der Antrieb des Elektromotors zum Planetengetriebe unabhängig von der Betätigung der Tretkurbelwelle des Kurbeltriebs durch die Muskelkraft des Fahrers erfolgen.

Gemäß einer weiteren bevorzugten Ausgestaltung der Erfindung ist der Kurbeltrieb mit dem Planetenträger des Planetengetriebes verbunden. Dadurch wird eine kompakte und sichere Wirkverbindung erreicht. Entsprechend einer alternativen bevorzugten Ausgestaltung der Erfindung ist der Kurbeltrieb mit dem Hohlrad des Planetengetriebes verbunden, wodurch ebenfalls eine kompakte und betriebsichere Wirkverbindung realisiert wird.

Weiterhin weist der Elektromotor bevorzugt eine Arretiervorrichtung mit Freilauf auf. Dadurch kann der Rotor des Elektromotors arretiert werden, um einen Antrieb des Fahrrads nur durch Muskelkraft ohne Schleppen des Elektromotors zu ermöglichen.

Gemäß einer weiteren bevorzugten Ausgestaltung der Erfindung weist das Hohlrad des Planetengetriebes eine Außenverzahnung auf, um einen Abtrieb des Planetengetriebes zu bilden. Dadurch können konventionelle Ketten von Ketten- oder Nabenschaltungen das Fahrrad durch den Eingriff in die Außenverzahnung des Hohlrads antreiben.

In weiterer vorteilhafter Ausgestaltung weist das Fahrrad an einem Antriebsrad eine Gangschaltung, insbesondere eine Kettenschaltung oder Nabenschaltung auf, wobei das Antriebsrad mit dem Planetengetriebe verbunden ist. Somit können konventionelle Gangschaltungen am erfindungsgemäßen Fahrrad mit elektrischem Hilfsantrieb eingesetzt werden, die weit verbreitet, betriebssicher und kostengünstig sind.

Vorzugsweise umfasst das erfindungsgemäße Fahrrad eine Steuereinheit, einen Drehzahlsensor am Planetengetriebe, insbesondere am Hohlrad des Planetengetriebes, einen Geschwindigkeitssensor zur Erfassung einer Fahrradgeschwindigkeit und einen elektrischen Aktuator zum Ausführen eines Gangwechsels. Die Steuereinheit ist ausgelegt, den Elektromotor und den elektrischen Aktuator entsprechend einem vorgegebenen Steuerungsprogramm und basierend auf den Werten des Drehzahlsensors und des Geschwindigkeitssensors zu steuern. Dadurch kann die gesamte Fahrsteuerung des Fahrrads mit einem Minimum an Sensoren und Aktuatoren realisiert werden, was sich wiederum einer gesteigerten Kosteneffizienz niederschlägt.

Gemäß einer weiteren bevorzugten Ausgestaltung der Erfindung ist die Steuereinheit ausgelegt um bei einem Gangwechsel das Drehmoment des Elektromotors derart zu verändern, dass eine auf die Gangschaltung ausgeübte Last reduziert ist. Durch diese Lastreduzierung kann der Gangwechsel optimiert und die Haltbarkeit bzw. Lebensdauer der Kette und der Schaltungskomponenten durch einen lastfreien Gangwechsel verbessert werden.

Vorzugsweise ist der Elektromotor ein Gleichstrommotor oder ein elektronisch kommutierter Motor. Diese Bauarten zeichnen sich besonders durch hohe Betriebssicherheit, Wartungsfreundlichkeit und gute Kosteneffizienz aus.

In weiterer vorteilhafter Ausgestaltung weist das Fahrrad eine Eingabevorrichtung auf, um verschiedene Steuerungsprogramme für die Steuereinheit auszuwählen. Auf diese Weise kann der Fahrer auf einfachste Weise z. B. den Grad der Unterstützung des Hybridantriebs einstellen.

Weiterhin weist das Sonnenrad eine Anzahl von Zähnen auf, die gleichgroß wie die Anzahl der Zähne der Planetenräder ist. Dadurch wird eine für den Betrieb des Elektrofahrrads vorteilhafte Getriebeübersetzung für alle Fahrzustände erreicht.

Weiterhin weist das Fahrrad eine Batteriesteuereinheit auf, die mit der Steuereinheit verbunden ist und einen Betriebszustand, wie z. B. einen Ladezustand oder Funktionsstörungen, der Batterie erfasst. Auf diese Weise kann der Fahrer jederzeit über die zur Verfügung stehende Energie der Batterie sowie etwaige Störungen informiert werden.

Besonders bevorzugt umfasst das Fahrrad ein zweites Planetengetriebe, welches zwischen dem Elektromotor und einem Planetenträger des ersten Planetengetriebes geschaltet ist, wobei das zweite Planetengetriebe ebenfalls um die Tretkurbelwelle des Kurbeltriebs angeordnet ist. Somit sind bei diesem bevorzugten Ausführungsbeispiel zwischen den Tretkurbeln zwei Planetengetriebe und ein Elektromotor in kompakter Weise angeordnet. Mit Hilfe des zweiten Planetengetriebes kann insbesondere die Drehzahl des Elektromotors reduziert werden, wobei alle gewünschten Fahrfunktionen realisiert werden können. Vorzugsweise reduziert das zweite Planetengetriebe die Drehzahl des Elektromotors insbesondere auf einen Wert von 1:8.

Besonders bevorzugt ist das Sonnenrad, die Planetenräder und das Hohlrad des ersten Planetengetriebes mit einer Schrägverzahnung ausgebildet und das Sonnenrad, die Planetenräder und das Hohlrad des zweiten Planetengetriebes ebenfalls mit einer Schrägverzahnung ausgebildet. Dabei ist jeweils ein Planetenrad des ersten Planetengetriebes direkt mit einem Planetenrad des zweiten Planetengetriebes verbunden. Hierdurch können die beiden Planetengetriebe ohne Planetenträger ausgebildet werden, so dass die Bauteilezahl der Planetengetriebe reduziert werden kann. Ferner kann hierdurch eine in Axialrichtung mögliche Bauraumreduzierung ermöglicht werden, so dass der elektrische Hilfsantrieb und die Planetenräder problemlos an der Tretkurbelwelle angeordnet werden können. Die reduzierte Bauteilezahl wirkt sich weiterhin vorteilhaft auf das Gewicht und die Kosten aus.

Weiter bevorzugt ist ferner eine Kupplung vorgesehen, welche am Kurbeltrieb angeordnet ist und welche ausgelegt ist, eine Kraft des Fahrers auf das Sonnenrad oder auf das Hohlrad des ersten Planetengetriebes abzugeben. Hierdurch können zwei unterschiedliche Betriebsmodi realisiert werden. Wenn die Fahrerkraft über die Kupplung auf das Sonnenrad übertragen wird, ergibt sich ein Fahren mit elektrischer Unterstützung durch den Elektromotor, wenn dieser zugeschaltet wird. Wenn die Fahrerkraft auf das Hohlrad übertragen wird, wird eine Notfahrt ohne elektrische Unterstützung ermöglicht, falls das elektrische System nicht zur Verfügung steht. Somit kann das Fahrrad immer ausschließlich durch die Fahrerkraft gefahren werden, wobei durch die direkte Übertragung der Fahrerkraft auf das Hohlrad und von dort auf die Kette keine unnötig bewegten anderen Teile des Planetengetriebes bzw. der Rotor des Elektromotors mitbewegt werden muss. Die Kupplung ist vorzugsweise manuell betätigbar.

### Zeichnung

Nachfolgend werden Ausführungsbeispiele der Erfindung unter Bezugnahme auf die begleitende Zeichnung im Detail beschrieben. In der Zeichnung ist:
- Figur 1: eine schematische Schnittansicht eines Kurbeltriebs mit daran angeordnetem Planetengetriebe und Elektromotor einem ersten Ausführungsbeispiel nicht gemäß der Erfindung,
- Figur 2: eine schematische Schnittansicht des Planetengetriebes von Figur 1,
- Figur 3: eine schematische Darstellung der Komponenten des Elektrofahrrads des ersten Ausführungsbeispiels, und
- Figur 4: eine schematische Schnittansicht eines Kurbeltriebs mit daran angeordneten Planetengetrieben und Elektromotor einem zweiten Ausführungsbeispiel nicht gemäß der Erfindung.

### Ausführungsformen

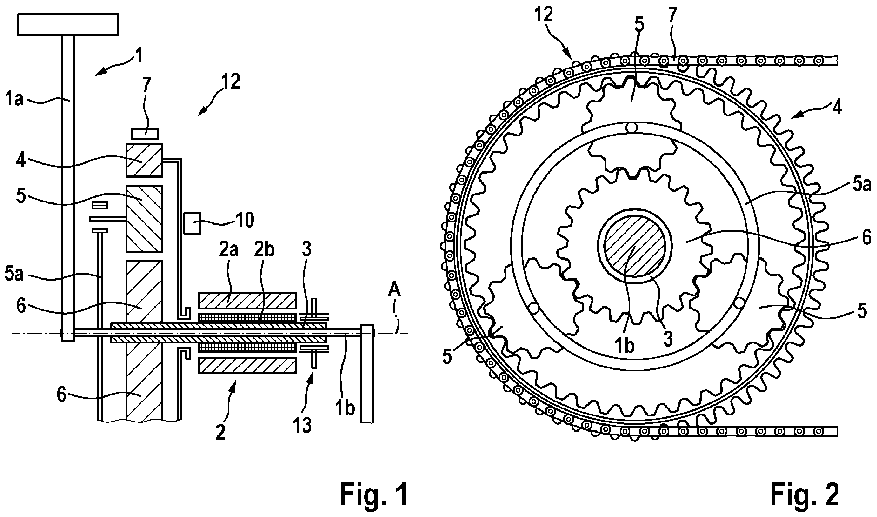

Nachfolgend wird unter Bezugnahme auf die Figuren 1 bis 3 ein Fahrrad mit elektrischem Hilfsantrieb einem ersten bevorzugten Ausführungsbeispiel nicht gemäß der Erfindung im Detail beschrieben.

Wie aus der schematischen Schnittansicht von Figur 1 ersichtlich, umfasst das Fahrrad mit elektrischem Hilfsantrieb einen Kurbeltrieb 1, der Tretkurbeln 1a umfasst, die an beiden Enden einer Tretkurbelwelle 1b befestigt sind, wobei die Tretkurbelwelle um eine Kurbelachse A drehbar angeordnet ist. Ein Elektromotor 2 mit einem Stator 2a und einem Rotor 2b ist auf einer Hohlwelle 3 angeordnet, wobei der Rotor 2b mit der Hohlwelle 3 fest verbunden ist, die wiederum mit einem Sonnenrad 6 eines Planetengetriebes 12 fest verbunden ist. Die Tretkurbelwelle 1b des Kurbeltriebs 1 ist durch die Hohlwelle 3 hindurchgeführt und fest mit einem Planetenträger 5a des Planetengetriebes 12 verbunden, auf dem Planetenräder 5 frei drehbar angeordnet sind, die jeweils mit dem Sonnenrad 6 und einem Hohlrad 4 des Planetengetriebes 12 im Eingriff stehen. Das Hohlrad 4 ist frei drehbar auf der Hohlwelle 3 gelagert. Auf dem Außenumfang des Hohlrads 4 ist eine Außenverzahnung vorgesehen, die mit den Gliedern einer Kette 7 im Eingriff steht, um den Abtrieb des Hohlrads 4 auf die Kette 7 des Fahrrads zu übertragen. Auf der Außenseite des Hohlrads 4 ist ein Drehzahlsensor 10 vorgesehen, der die Drehzahl des Hohlrads 4 erfasst.

Mit einer Arretiervorrichtung 13 kann der Rotor 2b des Elektromotors 2 bzw. das Sonnenrad 6 fest mit dem Rahmen des Fahrrads verbunden werden. Die Arretiervorrichtung 13 weist einen Freilauf auf, um eine Drehung des Rotors 2b bzw. des Sonnenrads 6 lediglich in positiver Drehrichtung zu ermöglichen und um ferner zu bewirken, dass das Sonnenrad 6 in negativer Drehrichtung fest abgestützt wird. Die Arretiervorrichtung 13 kann mechanisch oder elektrisch betätigt werden, wobei bei elektrischer Betätigung ein stromloser Zustand der Vorrichtung die arretierte Position bewirkt und der unter Strom stehende Zustand der Vorrichtung die nicht arretierte Position bewirkt.

Figur 2 zeigt eine vereinfachte, gegenüber Figur 1 vergrößerte, schematische Schnittansicht des Planetengetriebes 12, die die Tretkurbelwelle 1b, die Hohlwelle 3, das Sonnenrad 6, die Planetenräder 5 auf dem Planetenträger 5 a und das Hohlrad einschließlich der Kette 7 veranschaulicht.

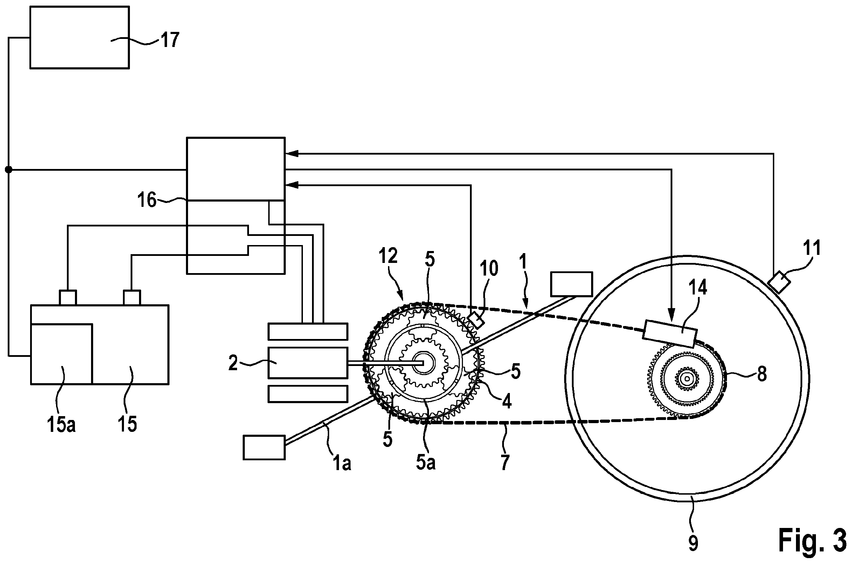

Figur 3 zeigt eine schematische Darstellung der Komponenten des nicht erfindungsgemäßen Elektrofahrrads. In Figur 3 ist der Elektromotor 2 zum besseren Verständnis zeichnerisch neben dem Planetengetriebe 12 anstelle an der zum Zentrum des Sonnenrads 6 korrekten axialen Anordnung (in der Figur 2 hinter dem Planetengetriebe 12 und daher nicht sichtbar) dargestellt. Wie aus der Figur 3 ersichtlich, ist die Kette 7 um die Außenverzahnung des Hohlrads 4 und eine Gangschaltung 8 gewunden, die auf der Nabe eines Antriebsrades 9 angeordnet ist. Die Gangschaltung 8 kann eine konventionelle Kettenschaltung mit einem Ritzelpaket oder eine Nabenschaltung sein. Ein vorzugsweise elektrischer Aktuator 14 ist zwischen der Kette 7 und der Gangschaltung 8 angeordnet. Dieser Aktuator 14 kann z. B. ein Magnet sein, dessen Position über einen Baudenzug (mechanisch) oder ein Signal (elektrisch) verändert werden kann, die jeweils genau einem Gang der Gangschaltung 9 zugeordnet ist.

Eine zentrale Steuereinheit (CPU) 16 ist zur Steuerung des Hybridantriebs des Fahrrads vorgesehen. Die Steuereinheit 16 empfängt die Signale des am Hohlrad 4 des Planetengetriebes 12 angeordneten Drehzahlsensors 10 sowie eines am Antriebsrad 9 angeordneten Geschwindigkeitssensors 11, die zur Steuerung des Antriebs erforderlich sind. Ferner ist der Motor 2 zur Steuerung direkt mit der Steuereinheit 16, sowie zur Energieversorgung mit einer Batterie 15 verbunden. Die Steuereinheit 16 ist außerdem mit dem Aktuator 14 verbunden, um einen Schaltvorgang auszulösen. Schließlich ist die Steuereinheit 16 über einen Kommunikationsbus mit einer Batteriesteuereinheit 15a zur Überwachung des Betriebszustandes der Batterie 15, sowie einer Eingabevorrichtung 17 verbunden, die so ausgelegt ist, dass der Fahrer verschiedene Fahr- bzw. Steuerungsprogramme der Steuereinheit 16 für verschiedene Fahrzustände des Fahrrads abrufen kann.

Es folgt im weiteren eine Beschreibung der Fahrzustände des Hybridantriebs, die mit diesem System dargestellt werden können.

### 1. Anfahren:

Beim Stillstand des Fahrzeugs betragen die Drehzahlen am Hohlrad 4, Planetenträger 5a und Sonnenrad 6 Null. Der Fahrer erzeugt beim Anfahren ein Drehmoment durch Muskelkraft am Planetenträger 5a, welches sich gegen den Fahrwiderstand abstützt. Dadurch wird das Sonnenrad 6 beschleunigt und sobald sich der Elektroantrieb zu drehen beginnt, erzeugt dieser ein Drehmoment, das sich nun wiederum am Fahrer abstützt, wenn der Fahrer an der Eingabevorrichtung eine elektromotorische Unterstützung eingestellt hat. Dadurch wird das Drehmoment auf den Abtrieb bzw. das Hohlrad 4, übertragen. Der Elektromotor 2 liefert nun eine positive Antriebsleistung. Die Leistung des Fahrers ist annähernd gleich Null, da die Drehzahl am Planetenträger 5a gleich Null ist. Der Fahrer kann das Abstützmoment mit seinem Körpergewicht erzeugen. Dementsprechend kann eine starke und komfortable Anfahrunterstützung realisiert werden, welche der der Fahrer durch das Drehmoment am Kurbeltrieb 1 einstellen bzw. kontrollieren kann.

### 2. Antreiben mit Unterstützung:

Der Fahrer betätigt den Kurbeltrieb 1 und der Elektromotor 2 erzeugt ein kontinuierliches Antriebsmoment, welches vom Fahrer abgestützt wird, während alle Teile des Planetengetriebes 12 in einem rotierenden Zustand sind, wenn der Fahrer in die Pedale tritt. Die Leistungen des Fahrers als auch des Elektroantriebs sind positiv. Auf diese Weise kann z. B. eine Unterstützung bei Bergfahrt oder zum Ausgleich anderer Fahrwiderstände erzeugt werden oder das Drehmoment in Beschleunigungsphasen kurzfristig erhöht werden.

### 3. Freilauf:

Wenn der Fahrer am Planetenträger 5a kein Drehmoment aufbringt, also nicht tritt, ist der Planetenträger 5a momentenfrei. Das Fahrrad wird nur durch den Elektromotor 2 angetrieben. Dadurch dreht sich das Sonnenrad 6 proportional zum Hohlrad 4. Der Planetenträger 5a ist bewegungslos.

### 4. Rekuperation:

Dieser Zustand einer Energierückgewinnung stellt sich beim Bremsen durch den Fahrer ein. Der Fahrer erzeugt ein negatives Drehmoment am Planetenträger 5a (Rücktritt). Dieses Drehmoment wird von einem generatorischen Drehmoment des Elektromotors 2 abgestützt. Das Fahrrad wird dadurch verzögert. Die Leistung des Fahrers ist annähernd gleich Null, da der Planetenträger 5a steht.

Der Fahrer kann über sein Körpergewicht abstützen. Der Elektromotor 2 wird als Generator betrieben und erzeugt eine Leistung, mit der er die Batterie lädt. Das Drehmoment kann bei der Rekuperation vorteilhafterweise vom Fahrer intuitiv über einen Rücktritt eingestellt werden. Bei einer Bergabfahrt kann eine Generatorfunktion bereitgestellt werden, wenn das Fahrrad keinen Freilauf hat beziehungsweise dieser inaktiviert ist.

### 5. Notfahrbetrieb:

Wenn die Batterie 15 leer ist oder der Elektromotor 2 defekt ist, kann das Sonnenrad 6 nicht mehr durch den Elektromotor 2 angetrieben werden. Dadurch ist das Fahrrad nicht fahrbar. Um in diesem Fall einen konventionellen Fahrbetrieb mit der Muskelkraft des Fahrers (also ein Fahren ohne Motor) zu ermöglichen, kann die Hohlwelle 3, welche mit dem Rotor 2b des Elektromotors 2 und dem Sonnenrad 6 fest verbunden ist, über die Arretiervorrichtung 13 fixiert werden. Der Freilauf in der Arretiervorrichtung 13 sorgt dafür, dass sich das Sonnenrad 6 nur in einer Richtung drehen kann. Im Antriebsfall kann die Arretiervorrichtung 13 das Drehmoment des Fahrers abstützen. Wenn der Planetenträger 5a steht, kann das Sonnenrad 6, wie im Zustand Freilauf beschrieben, rotieren.

### 6. Lastpunktanhebung:

In besonderen Fällen kann es wünschenswert sein, die Batterie mit Muskelarbeit zu laden. Das System erlaubt in diesem Fall eine so genannte Lastpunktanhebung, d. h. bei geringem Fahrwiderstand kann der Motor durch die Muskelkraft des Fahrers als Generator betrieben werden, um die Batterie zu laden. Der Fahrer treibt in diesem Zustand sowohl den Kurbeltrieb 1 als auch den Elektromotor 2 an (Arretiervorrichtung 13 nicht fixiert) und kann die Drehzahl an der Kurbel dabei frei einstellen.

### 7. Drehmomentreduktion während dem Schaltvorgang:

Um Beschädigungen oder einen übermäßigen Verschleiß bei den verwendeten konventionellen Ketten- oder Nabenschaltungen oder der Kette bei einem Schaltvorgang unter Last zu verhindern, ist die Steuereinheit 16 bei einer besonderen Ausführungsform so ausgelegt, dass eine Steuerung zur Veränderung des Drehmoments am Planetengetriebe 12 erfolgt, um die vom Hybridantrieb über die Kette 7 auf die Schaltung 8 ausgeübte Last zu reduzieren.

Hierzu wird beim Gangwechsel (sowohl beim Runterschalten als auch beim Hochschalten) die Drehzahl bzw. der Antrieb des Elektromotors 2 und somit das Drehmoment am Sonnenrad 6 des Planetengetriebes 12 kurzzeitig reduziert. Dadurch werden weiche und komfortable Schaltvorgänge an der Ketten- oder Nabenschaltung ermöglicht und die Schaltkomponenten geschont.

Neben dem oben beschriebenen Ausführungsbeispiel ist beim elektrischen Hilfsantrieb eine alternative Ausführungsform möglich, bei der der Elektromotor 2 auf das Sonnenrad 6 des Planetengetriebes 12 einwirkt, die Kraft des Fahrers über den Kurbeltrieb 1 auf das Hohlrad 4 des Planetengetriebes 12 einwirkt und der Abtrieb an die Kette 7 über den Planetenträger 5a des Planetengetriebes 12 erfolgt. Diese Ausführungsform weist den Vorteil einer geringeren Walzarbeit im Getriebe und somit einen verbesserten Wirkungsgrad auf. Nachteilig gegenüber dem oben beschriebenen Ausführungsbeispiel ist hingegen, dass dem Fahrer eine geringere Übersetzung im Fall des Notfahrbetriebs zur Verfügung steht. Für den elektrischen Antrieb kann in beiden Ausführungsbeispielen als Elektromotor 2 entweder ein Gleichstrommotor oder ein elektronisch kommutierter Motor verwendet werden. Der Elektromotor 2 kann die Übersetzungsstufen der verwendeten konventionellen Schaltung nutzen und daher kompakt aufgebaut werden. Das minimierte Bauvolumen des Elektromotors 2 erleichtert dessen Integration mit dem Planetengetriebe 12 am Kurbeltrieb 1.

Das nicht erfindungsgemäße Fahrrad mit elektrischem Hilfsantrieb weist gegenüber dem Stand der Technik neben verbesserten Fahreigenschaften aufgrund der günstigeren Lage des Gesamtschwerpunkts unterhalb des Fahrers auch den Vorteil auf, dass sich die Übersetzung des Antriebs über die Drehzahl am Elektromotor 2 stufenlos einstellen lässt und demzufolge einzelne Gangstufen der Schaltung 8 oder ein Umwerfer (für ein zweites Kettenblatt) am Kurbeltrieb 1 entfallen können. Darüber hinaus kann der Antrieb lediglich durch die vom Drehzahlsensor 10 am Hohlrad und Geschwindigkeitssensor 11 am Antriebsrad 9 erfassten Drehzahlen geregelt werden. Ein Drehmomentsensor ist nicht erforderlich. Somit ist durch die geringere Bauteileanzahl und den einfacheren Gesamtaufbau des Fahrrads eine wesentliche Reduzierung der Herstellkosten bzw. verbesserte Kosteneffizienz erreichbar.

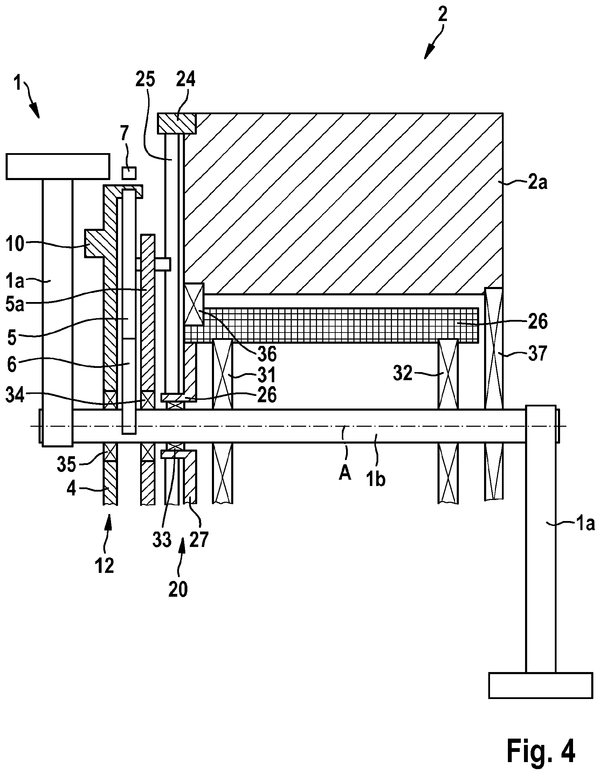

Nachfolgend wird unter Bezugnahme auf Figur 4 ein zweites Ausführungsbeispiel, gemäß der Erfindung, im Detail beschrieben, wobei gleiche bzw. funktional gleiche Teile mit den gleichen Bezugszeichen wie im ersten Ausführungsbeispiel bezeichnet sind.

Wie aus Figur 4 ersichtlich ist, umfasst das Fahrrad mit elektrischem Hilfsantrieb wieder einen Kurbeltrieb 1 mit Tretkurbeln 1a und einer Tretkurbelwelle 1b. Um die Tretkurbelwelle 1b ist wiederum der Elektromotor 2 sowie ein erstes Planetengetriebe 12 und ein zweites Planetengetriebe 20 angeordnet. Die Tretkurbelwelle 1a, die beiden Planetengetriebe 12, 20 und der Elektromotor liegen dabei gemeinsam in der Achse Ader Tretkurbelwelle 1b. Das zweite Planetengetriebe 20 ist dabei zwischen den Elektromotor 2 und das erste Planetengetriebe 12 geschaltet.

Die in Figur 4 dargestellte Antriebseinheit umfasst wiederum zwei Antriebe und einen Abtrieb, wobei der erste Antrieb durch das Treten des Fahrers bereitgestellt wird und der zweite Antrieb der Elektromotor 2 ist. Der Abtrieb ist wieder eine Kette 7, welche am Außenumfang des Hohlrads 7 der ersten Planetengetriebe angreift. Die Kraft des Fahrers wird über das erste Planetengetriebe 12 eingebracht und das Moment des Elektromotors 2 wird über das zweite Planetengetriebe 20 eingebracht. Das zweite Planetengetriebe 20 dient dabei zur Reduzierung der Drehzahl des elektrischen Antriebs. Hierdurch ist es möglich, dass der Elektromotor 2 als Antrieb mit hoher Drehzahl vorgesehen sein kann, so dass der Elektromotor im Vergleich mit einem elektrischen Antrieb mit kleinen Drehzahlen ein geringeres Gewicht bei gleicher Leistung aufweisen kann. Ferner ist es somit möglich, dass als Elektromotor 2 ein Elektromotor mit hohem Wirkungsgrad verwendet wird.

Wie aus Figur 4 gezeigt, ist der Rotor 2b des Elektromotors 2 über ein erstes Lager 31 und ein zweites Lager 32 drehbar an der Tretkurbelwelle 1b gelagert. Der Rotor 2b ist über einen Verbindungsflansch 27 mit einem Sonnenrad 26 des zweiten Planetengetriebes 20 verbunden. Das Sonnenrad 26 ist dabei mittels eines dritten Lagers 33 an der Tretkurbelwelle 1b abgestützt. Das Sonnenrad 26 befindet sich im Eingriff mit mehreren Planetenrädern 25 des zweiten Planetengetriebes 20, wobei die Planetenräder 25 an einem Planetenträger 5a gelagert sind. Die Planetenräder 25 befinden sich ferner im Eingriff mit einem ortsfesten Hohlrad 24 des zweiten Planetengetriebes 20, wobei das Hohlrad 24, wie in Figur 4 gezeigt, am Stator 2a fixiert ist. Der Planetenträger 5a ist über ein viertes Lager 34 auf der Tretkurbelwelle 1b gelagert. Wie weiter aus Figur 4 ersichtlich ist, lagert ein fünftes Lager 35 die Hohlwelle 4 des ersten Planetengetriebes 12. Ferner ist das Sonnenrad 6 des ersten Planetengetriebes mit der Tretkurbelwelle 1b fest verbunden. Die Planetenräder 5 des ersten Planetengetriebes 12, welche ebenfalls am Planetenträger 5a gelagert sind, kämmen sowohl mit dem Sonnenrad 6 als auch dem Hohlrad 4 des ersten Planetengetriebes. Das Hohlrad 4 weist wiederum eine Außenverzahnung für eine Verbindung zur Kette 7 auf. Der Stator 2a ist über ein sechstes Lager 36 am Rotor und über ein siebtes Lager 37 an der Tretkurbelwelle 1b gelagert. In axialer Richtung der Kurbelachse A ist somit das zweite Planetengetriebe zwischen dem ersten Planetengetriebe 12 und dem Elektromotor 2 angeordnet.

Somit umfasst das erste Planetengetriebe 12 das Sonnenrad 6, das Hohlrad 4, Planetenräder 5 und den Planetenträger 5a. Das zweite Planetengetriebe 20 umfasst das Sonnenrad 26, das Hohlrad 24, Planetenräder 25 und ebenfalls den Planetenträger 5a. Durch die Verwendung des gemeinsamen Planetenträgers 5a, an dem die Planetenräder 5 bzw. 25 jeweils an einer Axialseite angeordnet sind, kann somit die Bauteileanzahl und somit das Gewicht des Antriebs reduziert werden. Die Tretkurbelwelle 1b dient auch zur Abstützung des Hohlrads 4, des Planetenradträgers 5a, des Sonnenrads 26 sowie des Rotors 2b und zumindest einseitig des Stators 2a.

Das zweite Planetengetriebe 20 reduziert somit bei einer Aktivierung des Elektromotors 2 dessen Motordrehzahl und addiert eine gegebenenfalls noch bereitgestellte Leistung des Fahrers über das erste Planetengetriebe 12. Der Abtrieb erfolgt am Hohlrad 4 des ersten Planetengetriebes 12 über die Kette 7. Wie in Figur 4 gezeigt, weist somit die erfindungsgemäße Antriebseinheit nur eine sehr kurze Baulänge in axialer Richtung der Kurbelachse A auf, so dass die Länge der Tretkurbelwelle 1 ausreicht, um in diesem Bereich die beiden Planetengetriebe 12, 20 und den Elektromotor 2 anzuordnen. Durch die mögliche Drehzahlreduzierung mittels des zweiten Planetengetriebes 20 kann ferner der Elektromotor 2 sehr kompakt und mit nur geringem Gewicht ausgeführt werden. Dies verbessert weiterhin das Handling des Fahrrads, wobei der Elektromotor 2 mit höheren Drehzahlen betrieben werden kann und dabei einen höheren Wirkungsgrad aufweisen kann, so dass eine Gesamtreichweite des Elektrofahrrads signifikant verbessert werden kann.

Ansonsten entspricht dieses Ausführungsbeispiel dem vorhergehenden Ausführungsbeispiel, so dass auf die dort gegebene Beschreibung verwiesen werden kann.

Es sei ferner noch angemerkt, dass die in Figur 4 gezeigte Antriebseinheit noch kompakter vorgesehen werden kann, wenn auf den Planetenträger 5a verzichtet wird und die Planetenräder 5 des ersten Planetengetriebes 12 direkt mit den Planetenrädern 25 des zweiten Planetengetriebes 20, z.B. jeweils über eine Verbindungsachse verbunden werden. Hierdurch kann ein noch kompakterer Aufbau realisiert werden.

## Patentansprüche

1. Fahrrad mit elektrischem Hilfsantrieb, umfassend:
- einen Elektromotor (2),
- eine Batterie (15) zur Speicherung elektrischer Energie, welche mit dem Elektromotor (2) verbunden ist,
- einen Kurbeltrieb (1) mit Tretkurbeln (1a), die an einer Tretkurbelwelle (1b) befestigt sind, die um eine Kurbelachse (A) drehbar angeordnet ist, und
- ein Planetengetriebe (12) zum Antrieb des Fahrrads sowohl durch den Elektromotor (2) als auch durch Muskelkraft eines Fahrers,
- wobei das Planetengetriebe (12) und der Elektromotor (2) um die Tretkurbelwelle (1b) des Kurbeltriebs (1) angeordnet sind,
**dadurch gekennzeichnet,**
- **dass** der Kurbeltrieb (1) mit dem Sonnenrad (6) verbunden ist, der Elektromotor (2) mit einem Planetenträger (5a) verbunden ist und eine Kette (7) für einen Abtrieb mit dem Hohlrad (4) verbunden ist.

2. Fahrrad nach Anspruch 1, ferner umfassend eine Arretiervorrichtung (13) mit Freilauf, um einen Rotor (2b) des Elektromotors (2) zu arretieren.

3. Fahrrad nach einem der vorhergehenden Ansprüche, wobei das Hohlrad (4) des Planetengetriebes (12) eine Außenverzahnung aufweist, um einen Abtrieb des Planetengetriebes (12) zu bilden.

4. Fahrrad nach einem der vorhergehenden Ansprüche, wobei das Fahrrad an einem Antriebsrad (9) eine Gangschaltung (8), insbesondere eine Kettenschaltung oder eine Nabenschaltung, aufweist, wobei das Antriebsrad (9) mit dem Planetengetriebe (12) verbunden ist.

5. Fahrrad nach einem der vorhergehenden Ansprüche, ferner umfassend eine Steuereinheit (16), einen Drehzahlsensor (10) am Planetengetriebe (12), insbesondere am Hohlrad (4) des Planetengetriebes (12), einen Geschwindigkeitssensor (11) zur Erfassung einer Fahrradgeschwindigkeit und einen elektrischen Aktuator (14) zum Ausführen eines Gangwechsels, wobei die Steuereinheit (16) ausgelegt ist, den Elektromotor (2) und den elektrischen Aktuator (14) entsprechend einem vorgegebenen Steuerungsprogramm und basierend auf den Werten des Drehzahlsensors (10) und des Geschwindigkeitssensors (11) zu steuern.

6. Fahrrad nach einem der vorhergehenden Ansprüche, wobei die Anzahl der Zähne des Sonnenrads (6) gleich groß wie die Anzahl der Zähne der Planetenräder (5) ist.

7. Fahrrad nach Anspruch 1, ferner umfassend ein zweites Planetengetriebe (20), welches zwischen den Elektromotor (2) und das erste Planetengetriebe (12) geschaltet ist, wobei das zweite Planetengetriebe (20) um die Tretkurbelwelle (1b) des Kurbeltriebs angeordnet ist.

8. Fahrrad nach Anspruch 7, wobei das zweite Planetengetriebe (20) eine Drehzahl des Elektromotors (2) reduziert, insbesondere auf ein Verhältnis von 1:8.

9. Fahrrad nach Anspruch 7 oder 8, wobei das Sonnenrad (26) des zweiten Planetengetriebes mit dem Rotor (2b) des Elektromotors (2) verbunden ist und mit Planetenrädern (25) des zweiten Planetengetriebes kämmt, wobei die Planetenräder (25) an einem Planetenträger (5a) angeordnet sind, an welchem auch die Planetenräder (5) des ersten Planetengetriebes (12) angeordnet sind, wobei der Planetenträger (5a) drehbar an der Tretkurbelwelle (1b) gelagert ist.

10. Fahrrad nach Anspruch 7 oder 8, **dadurch gekennzeichnet, dass** das Sonnenrad (6), die Planetenräder (5) und das Hohlrad (4) des ersten Planetengetriebes (12) eine Schrägverzahnung aufweisen und das Sonnenrad (26), die Planetenräder (25) und das Hohlrad (24) des zweiten Planetengetriebes (20) eine Schrägverzahnung aufweisen, wobei jeweils ein Planetenrad (5) des ersten Planetengetriebes (12) direkt mit einem Planetenrad (25) des zweiten Planetengetriebes (20) verbunden ist.

11. Fahrrad nach einem der vorhergehenden Ansprüche, ferner umfassend eine Kupplung, welche am Kurbeltrieb (1) angeordnet und und welche ausgelegt ist, eine Kraft des Fahrrads auf das Sonnenrad (6) oder auf das Hohlrad (4) abzugeben.

## Claims

1. Bicycle having an electric auxiliary drive, comprising:
- an electric motor (2),
- a battery (15) for storing electric energy, which battery (15) is connected to the electric motor (2),
- a crank mechanism (1) with foot pedals (1a) which are fastened to a pedal crank shaft (1b) which is arranged such that it can be rotated about a crank axis (A), and
- a planetary transmission (12) for driving the bicycle both by way of the electric motor (2) and by way of muscle power of a rider,
- the planetary transmission (12) and the electric motor (2) being arranged around the pedal crank shaft (1b) of the crank mechanism (1),
**characterized**
- **in that** the crank mechanism (1) is connected to the sun gear (6), the electric motor (2) is connected to a planetary carrier (5a), and a chain (7) for an output is connected to the internal gear (4).

2. Bicycle according to Claim 1, comprising, furthermore, a locking apparatus (13) with a freewheel, in order to lock a rotor (2b) of the electric motor (2).

3. Bicycle according to either of the preceding claims, the internal gear (4) of the planetary transmission (12) having an external toothing system, in order to form an output of the planetary transmission (12).

4. Bicycle according to one of the preceding claims, the bicycle having a gear shift system (8), in particular a derailleur system or a hub gear, on a drive wheel (9), the drive wheel (9) being connected to the planetary transmission (12).

5. Bicycle according to one of the preceding claims, comprising, furthermore, a control unit (16), a rotational speed sensor (10) on the planetary transmission (12), in particular on the internal gear (4) of the planetary transmission (12), a speed sensor (11) for detecting a bicycle speed, and an electric actuator (14) for carrying out a gear change, the control unit (16) being designed to control the electric motor (2) and the electric actuator (14) in accordance with a predefined control program and based on the values of the rotational speed sensor (10) and the speed sensor (11).

6. Bicycle according to one of the preceding claims, the number of teeth of the sun gear (6) being equal to the number of teeth of the planetary gears (5).

7. Bicycle according to Claim 1, comprising, furthermore, a second planetary transmission (20) which is connected between the electric motor (2) and the first planetary transmission (12), the second planetary transmission (20) being arranged around the pedal crank shaft (1b) of the crank mechanism.

8. Bicycle according to Claim 7, the second planetary transmission (20) reducing a rotational speed of the electric motor (2), in particular to a ratio of 1:8.

9. Bicycle according to Claim 7 or 8, the sun gear (26) of the second planetary transmission being connected to the rotor (2b) of the electric motor (2) and meshing with planetary gears (25) of the second planetary transmission, the planetary gears (25) being arranged on a planetary carrier (5a), on which the planetary gears (5) of the first planetary transmission (12) are also arranged, the planetary carrier (5a) being mounted rotatably on the pedal crank shaft (1b).

10. Bicycle according to Claim 7 or 8, **characterized in that** the sun gear (6), the planetary gears (5) and the internal gear (4) of the first planetary transmission (12) have a helical toothing system, and the sun gear (26), the planetary gears (25) and the internal gear (24) of the second planetary transmission (20) have a helical toothing system, in each case one planetary gear (5) of the first planetary transmission (12) being connected directly to a planetary gear (25) of the second planetary transmission (20).

11. Bicycle according to one of the preceding claims, comprising, furthermore, a clutch which is arranged on the crank mechanism (1) and and which is designed to output a power of the bicycle to the sun gear (6) or to the internal gear (4).

## Revendications

1. Bicyclette comprenant un entraînement auxiliaire électrique, comprenant :
- un moteur électrique (2),
- une batterie (15) pour stocker de l'énergie électrique, qui est connectée au moteur électrique (2),
- un mécanisme à manivelle (1) avec des pédales (1a) qui sont fixées à un arbre de pédalier (1b) qui est disposé de manière à pouvoir tourner autour d'un axe de manivelle (A), et
- un engrenage planétaire (12) pour l'entraînement de la bicyclette à la fois par le moteur électrique (2) ainsi que par la force musculaire d'un cycliste,
- l'engrenage planétaire (12) et le moteur électrique (2) étant disposés autour de l'arbre de pédalier (1b) du mécanisme à manivelle (1),
**caractérisée en ce que**
- le mécanisme à manivelle (1) est connecté à la roue solaire (6), le moteur électrique (2) est connecté à un porte-satellites (5a) et une chaîne (7) pour une prise de force est connectée à la couronne dentée (4).

2. Bicyclette selon la revendication 1, comprenant en outre un dispositif de blocage (13) avec une roue libre, pour bloquer un rotor (2b) du moteur électrique (2).

3. Bicyclette selon l'une quelconque des revendications précédentes, dans laquelle la couronne dentée (4) de l'engrenage planétaire (12) présente une denture extérieure pour former une prise de force de l'engrenage planétaire (12).

4. Bicyclette selon l'une quelconque des revendications précédentes, dans laquelle la bicyclette présente au niveau d'une roue d'entraînement (9), un changement de vitesses (8), en particulier un changement à chaîne ou un changement à un moyeu, la roue d'entraînement (9) étant connectée à l'engrenage planétaire (12).

5. Bicyclette selon l'une quelconque des revendications précédentes, comprenant en outre une unité de commande (16), un capteur de vitesse de rotation (10) au niveau de l'engrenage planétaire (12), en particulier au niveau de la couronne dentée (4) de l'engrenage planétaire (12), un capteur de vitesse (11) pour détecter une vitesse de la bicyclette et un actionneur électrique (14) pour effectuer un changement de vitesses, l'unité de commande (16) étant conçue pour commander le moteur électrique (2) et l'actionneur électrique (14) en fonction d'un programme de commande prédéfini et sur la base des valeurs du capteur de vitesse de rotation (10) et du capteur de vitesse (11).

6. Bicyclette selon l'une quelconque des revendications précédentes, dans laquelle le nombre de dents de la roue solaire (6) est égal au nombre de dents des satellites (5).

7. Bicyclette selon la revendication 1, comprenant en outre un deuxième engrenage planétaire (20) qui est monté entre le moteur électrique (2) et le premier engrenage planétaire (12), le deuxième engrenage planétaire (20) étant disposé autour de l'arbre de pédalier (1b) du mécanisme à manivelle.

8. Bicyclette selon la revendication 7, dans laquelle le deuxième engrenage planétaire (20) réduit une vitesse de rotation du moteur électrique (2), en particulier à un rapport de 1:8.

9. Bicyclette selon la revendication 7 ou 8, dans laquelle la roue solaire (26) du deuxième engrenage planétaire est connectée au rotor (2b) du moteur électrique (2) et s'engrène avec des satellites (25) du deuxième engrenage planétaire, les satellites (25) étant disposés sur un porte-satellites (5a) sur lequel sont également disposés les satellites (5) du premier engrenage planétaire (12), le porte-satellites (5a) étant supporté de manière rotative sur l'arbre de pédalier (1b).

10. Bicyclette selon la revendication 7 ou 8, **caractérisée en ce que** la roue solaire (6), les satellites (5) et la couronne dentée (4) du premier engrenage planétaire (12) présentent une denture oblique et la roue solaire (26), les satellites (25) et la couronne dentée (24) du deuxième engrenage planétaire (20) présentent une denture oblique, un satellite (5) du premier engrenage planétaire (12) étant directement connecté à un satellite (25) du deuxième engrenage planétaire (20).

11. Bicyclette selon l'une quelconque des revendications précédentes, comprenant en outre un embrayage qui est disposé au niveau du mécanisme à manivelle (1) et et qui est conçu pour délivrer une force de la bicyclette à la roue solaire (6) ou à la couronne dentée (4).
